# EUROPÄISCHE PATENTANMELDUNG

(11) **EP 4 621 274 A1**
(43) Veröffentlichungstag der Anmeldung: **24.09.2025**
(21) Anmeldenummer: 24165317.9
(22) Anmeldetag: 21.03.2024
(51) Int. Cl.: F16L 11/15, F16L 11/20, F16L 13/02, F16L 25/00, F16L 33/01, F16L 33/26

(54) **HOCHGRADIG FLEXIBLES LEITUNGSELEMENT UND VERFAHREN ZUR HERSTELLUNG EINES FLEXIBLEN LEITUNGSELEMENTS**

(71) Anmelder: Witzenmann GmbH, 75175 Pforzheim (DE); Carl Zeiss SMT GmbH, 73447 Oberkochen (DE)
(72) Erfinder: Czech, Jonas, 75428 Illingen (DE); Gehring, Matthias, 75334 Straubenhardt (DE); Michalis, Theodoros, 75172 Pforzheim (DE); Scheuermann, Simon, 74930 Ittlingen (DE); Störzinger, Michael, 75015 Bretten (DE); Jankovic, Robert, 75180 Pforzheim (DE); Schulze, Daniel, 73447 Oberkochen (DE); Lill, Dirk, 73447 Oberkochen (DE); Speidel, Timo, 73447 Oberkochen (DE); Krause, Tobias, 73447 Oberkochen (DE)
(74) Vertreter: LBP Lemcke, Brommer & Partner Patentanwälte mbB

(57) **Zusammenfassung**

Vorgeschlagen wird ein flexibles Leitungselement (1), aufweisend:
einen metallischen Wellschlauch-Abschnitt oder Balg (2);
an wenigstens einem Ende des Wellschlauch-Abschnitts oder Balgs (2) ein rohrförmiges Anschlussteil (4), das über ein ringförmiges Gegenstück (3) mit dem Wellschlauch-Abschnitt oder Balg (2) verbunden ist, wobei das Gegenstück (3) auf einer Seite mit dem Wellschlauch-Abschnitt oder Balg (2) und auf der anderen Seite mit dem Anschlussteil (4) stoffschlüssig verbunden ist; und
eine in dem Wellschlauch-Abschnitt oder Balg (2) und in dem Gegenstück (3) aufgenommene, schlauchförmige Innenkomponente (6) aus einem Kunststoff, insbesondere einem Elastomer-Werkstoff, vorzugsweise aus Fluorkautschuk.
Das flexible 1Leitungselement (1) zeichnet sich dadurch aus, dass
axial zwischen dem Anschlussteil (4) und dem Gegenstück (3) ein durchgängig umlaufender Freiraum (5) gebildet ist; und
die Innenkomponente (6) in einem Bereich des genannten Endes einen umlaufenden Vorsprung (6a) aufweist, der sich bezüglich einer Längsachse (L) des Leitungselements (1) radial nach außen erstreckt, und mit dem die Innenkomponente (6) in den Freiraum (5) eingreift.

## Beschreibung

Die Erfindung betrifft mit dem Anspruch 1 ein flexibles Leitungselement und mit dem Anspruch 15 ein Verfahren zur Herstellung eines flexiblen Leitungselements.

Aus der EP 3 951 228 A1 ist ein flexibles Leitungselement gemäß dem Oberbegriff des Anspruchs 1 bekannt. Dabei ist die Innenkomponente in Form eines extrudierten PTFE-Liners bei im Wesentlichen axialer Erstreckung zwischen einem inneren und einem äußeren Verbindungsteil gehalten, woran sich axial noch ein weiteres Anschlussteil anschließt. Aufgrund dieser axial lang bauenden Verbindungsgeometrie ergibt sich bei begrenztem Bauraum eine relativ geringe Flexibilität der Leitung. Dazu trägt auch bei, dass der als Innenkomponente eingesetzte PTFE-Liner nur relativ große Biegeradien zulässt.

Wollte man bei dem vorbekannten Leitungselement einen elastischeren, gummiartigen Liner als Innenkomponente verwenden, um die Flexibilität zu verbessern, wäre das bisherige Verbindungskonzept nicht verwendbar, denn der Liner würde auf Dauer aus der Verbindung kriechen, was zu einem Verlust der Dichtigkeit führen würde. Deshalb ist eine neuartige Verbindung erforderlich.

Der Erfindung liegt die Aufgabe zugrunde, ein flexibles Leitungselement und ein Verfahren zu dessen Herstellung anzugeben, das - verglichen mit dem Stand der Technik - bei gleicher Baulänge eine verbesserte Flexibilität bzw. eine zumindest gleiche Flexibilität bei verkürzter Baulänge des flexiblen Leitungselements ermöglicht, wobei eine dauerhafte Dichtigkeit gewährleistet sein soll, um insbesondere hochgradig sauberkeitskritische Verwendungen zu ermöglichen.

Diese Leitungselemente mit erhöhter Flexibilität und verbesserter Dichtigkeit können bzw. Sollen in einer Projektionsbelichtungsanlage für die Halbleiterlithographie verwendet werden. In solchen Projektionsbelichtungsanlagen können Kühlleitungen eingesetzt werden, um Elemente in der Anlage zu kühlen. Bei diesen Kühlleitungen ist zu beachten, dass die Übertragung von Druckschwankungen des Kühlmediums in das Gesamtsystem minimiert wird und dass die hohen Sauberkeitsanforderungen in den Anlagen eingehalten werden.

Diese Aufgabe wird erfindungsgemäß gelöst durch ein flexibles Leitungselement mit den Merkmalen des Anspruchs 1. Sie wird auch gelöst durch ein Verfahren zur Herstellung eines flexiblen Leitungselements mit den Merkmalen des Anspruchs 15.

Vorteilhafte Weiterbildungen der erfindungsgemäßen Idee sind in den jeweiligen Unteransprüchen definiert.

Erfindungsgemäß weist ein flexibles Leitungselement auf: einen metallischen Wellschlauch-Abschnitt oder Balg; an wenigstens einem Ende des Wellschlauch-Abschnitts oder Balgs ein rohrförmiges Anschlussteil, das über ein ringförmiges Gegenstück mit dem Wellschlauch-Abschnitt oder Balg verbunden ist, wobei das Gegenstück auf einer Seite mit dem Wellschlauch-Abschnitt oder Balg und auf der anderen Seite mit dem Anschlussteil stoffschlüssig verbunden ist; und eine in dem Wellschlauch-Abschnitt oder Balg und in dem Gegenstück aufgenommene, schlauchförmige Innenkomponente aus einem Kunststoff, insbesondere einem Elastomer-Werkstoff, vorzugsweise aus Fluorkautschuk (FKM) und/oder eine den Wellschlauch-Abschnitt oder Balg und das Gegenstück umgebende, schlauchförmige Außenkomponente aus einem Kunststoff, insbesondere einem Elastomer-Werkstoff, vorzugsweise aus Fluorkautschuk (FKM). Das erfindungsgemäße flexible Leitungselement ist dadurch gekennzeichnet, dass axial zwischen dem Anschlussteil und dem Gegenstück ein durchgängig umlaufender Freiraum gebildet ist; und dass die Innenkomponente und/oder die Außenkomponente in einem Bereich des genannten Endes einen umlaufenden Vorsprung aufweist, der sich bezüglich einer Längsachse des Leitungselements radial nach außen (für die Innenkomponente) bzw. radial nach innen erstreckt (für die Außenkomponente), und mit dem die Innenkomponente bzw. die Außenkomponente in den Freiraum eingreift. Anders ausgedrückt: die Innenkomponente bzw. die Außenkomponente ist mit ihrem Vorsprung in dem Freiraum aufgenommen. Die Innenkomponente bzw. die Außenkomponente ist somit vorteilhafter Weise zwischen Gegenstück und Anschlussteil klemmend in dem Freiraum gehalten. Dies ermöglicht eine besonders flexible Lösung mit hoher Beweglichkeit in jeder Bewegungsrichtung.

Das ringförmige Gegenstück, das auch als Anschweißteil bezeichnet werden kann bzw. als ein solches fungiert, sorgt auf diese Weise für die Verbindung zwischen Anschlussteil und Wellschlauch-Abschnitt oder Balg.

Bevorzugt ist das flexible Leitungselement an seinen beiden Enden identisch und wie vorstehend beschrieben ausgebildet.

Anschlussteil und Gegenstück sind bevorzugt in einem Metall, z.B. in Edelstahl, ausgebildet, und die stoffschlüssige Verbindung zwischen den beiden Teilen ist eine umlaufende Schweißverbindung.

Der Wellschlauch-Abschnitt oder Balg ist vorzugsweise ringgewellt ausgebildet. Er wird nachfolgend vereinfachend nur als "Balg" bezeichnet.

Durch die neuartige Verbindungsgeometrie, die mit der genannten besonderen Ausgestaltung der Innenkomponente mit dem genannten umlaufenden Vorsprung einhergeht, ist es nun insbesondere möglich, einen elastischeren, gummiartigen Liner, z.B. ein Spritzgussteil aus FKM, als Innenkomponente verwenden, um die Flexibilität des Leitungselements zu verbessern, was mit dem bisherigen Verbindungskonzept nicht realisierbar gewesen wäre bzw. langfristig zu einem Verlust der Dichtheit geführt hätte. Bei gleicher Länge kann das Leitungselement somit flexibler ausgebildet werden; andererseits lässt sich dieselbe Flexibilität wie zuvor schon bei kürzerer Baulänge erreichen.

Die Gewährleistung der Dichtheit ist als besonders relevant für die Funktionserfüllung des Leitungselements anzusehen, insbesondere auch hinsichtlich der Vermeidung von Leckagen in den Zwischenraum zwischen Innenkomponente und Balg.

Bei der Herstellung eines flexiblen Leitungselements, insbesondere des erfindungsgemäßen flexiblen Leitungselements kann wie folgt verfahren werden:
i) Bereitstellen eines metallischen Wellschlauch-Abschnitts oder Balgs;
ii) an wenigstens einem Ende des Wellschlauch-Abschnitts oder Balgs stoffschlüssiges Anbinden eines ringförmigen Gegenstücks;
iii) Einbringen einer schlauchförmigen Innenkomponente, insbesondere aus einem Elastomer-Werkstoff, in den Wellschlauch-Abschnitt oder Balg und in das Gegenstück, insbesondere bei radialem Zusammendrücken der Innenkomponente, die in einem Bereich des genannten Endes einen umlaufenden Vorsprung aufweist, der sich bezüglich einer Längsachse des Leitungselements radial nach außen erstreckt;
iv) axiales Anfügen eines rohrförmigen Anschlussteils an das Gegenstück unter Bildung eines durchgängig umlaufenden Freiraums axial zwischen Anschlussteil und Gegenstück, so dass die Innenkomponente mit ihrem Vorsprung in den Freiraum eingreift;
v) dauerhaftes, bevorzugt stoffschlüssiges Verbinden von Anschlussteil und Gegenstück unter Einklemmung oder Verpressung der Innenkomponente zwischen Anschlussteil und Gegenstück in einem Bereich des Freiraums.

Folgende Ausgestaltungen der Erfindung haben sich in der Praxis als besonders vorteilhaft erwiesen:
Eine erste Ausgestaltung des erfindungsgemäßen flexiblen Leitungselements ist dadurch gekennzeichnet, dass der Freiraum eine in der radialen Richtung wirksame Hinterschneidung aufweist.

Hierdurch lässt sich die Haltewirkung auf die Innenkomponente weiter verbessern. Eine "in der radialen Richtung wirksame Hinterschneidung" ist eine Hinterschneidung, die einer Auszugsbewegung in radialer Richtung entgegenwirkt. Die eigentliche Ausnehmung, die die Hinterschneidung bildet, erstreckt sich also in axialer Richtung.

Eine andere Ausgestaltung des erfindungsgemäßen flexiblen Leitungselements ist dadurch gekennzeichnet, dass die Innenkomponente an dem Vorsprung eine Auswölbung in axialer Richtung aufweist, die mit der Hinterschneidung in Eingriff steht.

Dies wird vorliegend aufgrund der geometrischen Ähnlichkeit auch als "P-Geometrie" der Innenkomponente bzw. des Vorsprungs bezeichnet. Durch diese lässt sich die Haltewirkung auf die Innenkomponente noch weiter verbessern.

Eine weitere Ausgestaltung des erfindungsgemäßen flexiblen Leitungselements ist dadurch gekennzeichnet, dass die Hinterschneidung in dem Gegenstück ausgebildet ist.

Dies hat sich in der Umsetzung als besonders günstig erwiesen. Grundsätzlich kommt jedoch alternativ (oder zusätzlich) auch in Betracht, die Hinterschneidung in dem Anschlussteil auszubilden, sofern auch die Innenkomponente im Bereich des Vorsprungs entsprechend ausgestaltet ist.

Eine noch andere Ausgestaltung des erfindungsgemäßen flexiblen Leitungselements ist dadurch gekennzeichnet, dass Hinterschneidung eine abgerundete Innenkontur aufweist.

Auf diese Weise lassen sich Schadeinwirkungen auf die Innenkomponente gut und sicher reduzieren, was die Haltbarkeit verlängern kann.

Eine wieder andere Ausgestaltung des erfindungsgemäßen flexiblen Leitungselements ist dadurch gekennzeichnet, dass die Auswölbung der Innenkomponente eine zu der Hinterschneidung bzw. zu deren Innenkontur komplementäre Außenkontur aufweist.

Untersuchungen der Anmelderin haben gezeigt, dass sich auf diese Weise die Sicherheit und Dichtigkeit der Verbindung weiter verbessern lässt.

Eine vorteilhafte Ausgestaltung des erfindungsgemäßen flexiblen Leitungselements ist dadurch gekennzeichnet, dass ein die Hinterschneidung in radialer Richtung nach innen begrenzender Steg eine abgerundete Außenkontur aufweist.

Auf diese Weise kann es auch in diesem Bereich zu keiner Beschädigung der Innenkomponente kommen.

Eine besonders vorteilhafte Ausgestaltung des erfindungsgemäßen flexiblen Leitungselements ist dadurch gekennzeichnet, dass der Vorsprung den Freiraum und insbesondere die Hinterschneidung nur zu einem Bruchteil, d.h. nicht vollständig ausfüllt.

Dadurch ist sichergestellt, dass es beim Fügen der Verbindung nicht zu Blockierungen und in der Folge zu Undichtigkeiten kommt, die entstehen könnten, wenn der Vorsprung "zu groß" bzw. zu voluminös für den Freiraum wäre. Die genannte Ausgestaltung schafft deswegen eine Art "Freiraum-Reserve".

Eine vorteilhafte Ausgestaltung des erfindungsgemäßen flexiblen Leitungselements ist dadurch gekennzeichnet, dass die Innenkomponente in einem lichten Abstand in radialer Richtung zu dem Wellschlauch-Abschnitt oder Balg angeordnet ist.

Auf diese Weise ist nicht zu befürchten, dass die Innenkomponente die inhärente Flexibilität des Balgs negativ beeinflusst. Außerdem kann durch den resultierenden Spalt zwischen Balg und Liner bzw. Innenkomponente eine Druckdämpfung von FIV (sog. "flow introduced vibrations") sowie ein Ausgleich von Montagetoleranzen bei einem möglichst laminaren Durchfluss erreicht werden. Des Weiteren ermöglicht die Innenkomponente eine verbesserte Strömungsführung, da anders als beim Balg keine Verwirbelungen auftreten.

FIV sind vor allem deshalb kritisch, weil sie eine gesamte Anlage, in die das flexible Leitungselement integriert ist, in Schwingung versetzen können und zu Abweichungen in der Fertigung führen.

Eine besonders vorteilhafte Ausgestaltung des erfindungsgemäßen flexiblen Leitungselements ist dadurch gekennzeichnet, dass ein lichter Innendurchmesser der Innenkomponente gleich einem minimalen lichten Innendurchmesser des Anschlussteils ist, der vorzugsweise zu dessen freien Ende hin erweitert ist.

Dadurch wird Wirbelbildungen innerhalb des flexiblen Leitungselements effektiv vorgebeugt, damit keine Druckverluste entstehen und/oder keine störende Geräuschentwicklung auftritt.

Eine andere Ausgestaltung des flexiblen Leitungselements sieht vor, dass die Innenkomponente eine radial außenliegende Nut aufweist, in die das Gegenstück bevorzugt formschlüssig eingreift.

Dadurch ergibt sich eine zusätzliche Dichtlippe, was die Sicherheit gegenüber einer Leckage in den Gasraum zwischen Innenkomponente und Balg erhöht.

Wieder eine andere Ausgestaltung des flexiblen Leitungselements sieht vor, dass die Innenkomponente einen weiteren radial außenliegenden umlaufenden Vorsprung aufweist, der auf einer von dem Anschlussteil abgewandten Seite an dem Gegenstück anliegt, oder wenigstens einen weiteren radial außenliegenden umlaufenden Vorsprung, der in eine an einer Innenseite des Gegenstücks angeordnete Nut eingreift.

Dadurch kann die Leckage-Sicherheit weiter verbessert werden. Insbesondere können der weitere Vorsprung und die Nut im Querschnitt dreieckförmig oder halbrund ausgebildet sind. Auch eine P-Form oder Rechteckform sind möglich. Speziell der weitere Vorsprung kann an das Material der Innenkomponente anvulkanisiert sein.

Wieder eine andere Ausgestaltung des erfindungsgemäßen flexiblen Leitungselements ist dadurch gekennzeichnet, dass das Gegenstück endständig einen axialen Zentriervorsprung und das Anschlussteil an seiner dem Gegenstück zugewandten Seite eine komplementäre Ausnehmung aufweist, wobei das Gegenstück mit dem Zentriervorsprung in die Ausnehmung eingreift, oder umgekehrt.

Eine solche Ausgestaltung erleichtert das ordnungsgemäße Fügen von Anschlussteil und Gegenstück.

Im Bereich des Zentriervorsprungs und der Ausnehmung jeweils komplementäre Gewindestrukturen vorhanden sind. Die Dichtstruktur (d.h. insbesondere der Vorsprung der Innenkomponente) kann hierdurch definiert verpresst werden. Nach dem Verschrauben ist ggf. zusätzlich noch eine äußere Schweißnaht vorzusehen, um die Dichtheit zu garantieren.

Noch eine andere Ausgestaltung des erfindungsgemäßen flexiblen Leitungselements ist dadurch gekennzeichnet, dass das Anschlussteil an einer dem Freiraum zugewandten Seitenfläche eben ausgebildet ist, wobei vorzugsweise die Seitenfläche sich ausschließlich in radialer Richtung erstreckt.

Eine solche Ausgestaltung hat sich in Versuchen der Anmelderin als besonders gut handhabbar erwiesen.

Eine weitere Ausgestaltung des erfindungsgemäßen flexiblen Leitungselements, die insbesondere auf der vorstehend genannten Ausgestaltung aufbauen kann, ist dadurch gekennzeichnet, dass zwischen einer endständigen Stirnseite der Innenkomponente und dem Anschlussteil, insbesondere an dessen (radialer verlaufender) Seitenfläche, ein durchgängig umlaufendes Ringteil angeordnet ist.

Ein solches Ringteil kann zusätzlichen Druck auf die Innenkomponente speziell im Bereich des Vorsprungs ausüben und so die erreichbare Haltewirkung besonders positiv beeinflussen.

Um die vielfältigen potentiellen Vorteile des Ringteils besonders effektiv ausnutzen zu können, ist eine weitere Ausgestaltung des erfindungsgemäßen flexiblen Leitungselements dadurch gekennzeichnet, dass das Ringteil
a) sich radial bis in einen Bereich des Freiraums und bevorzugt bis gegen das Gegenstück erstreckt; und/oder
b) radial auf Höhe der Hinterschneidung eine axiale Auswölbung aufweist, insbesondere eine Auswölbung mit abgerundeter Außenkontur; und/oder
c) einen sich in radialer Richtung verjüngenden Querschnitt aufweist, insbesondere in einem radial innerliegenden Teilabschnitt des Ringteils; und/oder
d) einen lichtem Innendurchmesser aufweist, der dem lichten Innendurchmesser der Innenkomponente und dem lichten Innendurchmesser des Anschlussteils entspricht; und/oder
e) einen axialen Vorsprung aufweist, der die oben genannte, in der radialen Richtung wirksame Hinterschneidung ausbildet.

Merkmal a) ermöglich eine besonders großflächige Wirkung des Ringteils; außerdem ergibt sich bei der bevorzugten Weiterbildung eine Zentrierwirkung für das Ringteil.

Merkmal b) verbessert die erreichbare Haltewirkung für die Innenkomponente noch weiter. Die genannte Außenkontur muss dabei nicht abgerundet sein; auch spitze, z.B. dreieckförmige Konturen haben sich bewährt.

Merkmal c) sorgt beim Fügen von Gegenstück und Anschlussteil für eine besonders feste Verpressung des Vorsprungs und somit für eine besonders gute Haltewirkung.

Merkmal d) sorgt dafür, dass das Ringteil die Strömung durch das flexible Leitungselement nicht beeinträchtigt.

Merkmal e) sorgt dafür, dass Gegenstück und Anschlussteil besonders einfach und kostengünstig ausgestaltet sein können. In diesem Zusammenhang kann der genannte axiale Vorsprung zu dem restlichen Ringteil einen abgerundeten (konkaven) Übergangsbereich aufweisen, und der umlaufende Vorsprung der Innenkomponente bzw. der Außenkomponente kann zumindest teilweise entsprechend komplementär (konvex) ausgebildet sein. Wenn zudem weitere Abschnitte des Freiraums konkav-abgerundet ausgebildet sind, kann der Vorsprung der Innenkomponente bzw. der Außenkomponente einen im Wesentlichen kreisrunden Querschnitt aufweisen (sog. "O-Variante").

In Weiterbildung des erfindungsgemäßen Verfahrens kann entsprechend vorgesehen sein, dass zusammen mit dem Anschlussteil ein durchgängig umlaufendes Ringteil zwischen einer endständigen Stirnseite der Innenkomponente und dem Anschlussteil angefügt bzw. eingefügt wird. Dieses Ringteil kann weiterhin so ausgebildet ist, wie vorstehend detailliert beschrieben.

Ringteil und Gegenstück können bei entsprechender Weiterbildung der Erfindung auch einteilig, d.h. als ein gemeinsames Bauteil ausgebildet sein, z.B. durch Umformung oder Stoffschluss.

Eine andere Ausgestaltung des erfindungsgemäßen flexiblen Leitungselements ist dadurch gekennzeichnet, dass Ringteil und Anschlussteil einteilig ausgeführt sind. Dabei sind Gegenstück und Anschlussteil bevorzugt nicht stoffschlüssig, sondern lösbar, z.B. mittels einer Schraubverbindung verbunden, wie weiter oben schon angesprochen.

Speziell das Ringteil kann als Drehteil, Tiefziehteil (aus Blech) oder als Gussteil ausgebildet sein. Auch nichtmetallische Werkstoff können Verwendung finden.

Eine andere Weiterbildung des flexiblen Leitungselements ist dadurch gekennzeichnet, dass das Ringteil umfänglich umlaufend eine dem Gegenstück zugewandte Einführfase und das Gegenstück eine komplementäre, mit der Einführfase zusammenwirkende, umfänglich umlaufende Einführabschrägung aufweist.

Auf die genannte Einführfase kann bei einer anderen Weiterbildung auch verzichtet werden, so dass sich ein Mindestauflagefläche für das Ringteil ergibt. Um eine Zentrierung und vereinfachte Montierbarkeit zu erreichen, kann diese Mindestauflagefläche als Passung ausgeführt sein.

Der Vorteil dieser Ausgestaltung ist eine deutlich verbesserte Montierbarkeit der Baugruppe sowie eine bessere Dichtwirkung durch konzentrische Ausrichtung der Teile zueinander.

Noch eine Weiterbildung des flexiblen Leitungselements ist dadurch gekennzeichnet, dass das Gegenstück auf seiner dem Anschlussteil abgewandten Seite innenseitig eine Einführschräge aufweist.

Diese Einführschräge ist beim Einschieben der Innenkomponente (Liner) in den Balg wirksam. Da die dichtenden Elemente des Liners beim Einschieben oder Durchziehen nicht beschädigt werden dürfen, kann vorzugsweise eine Fase oder alternativ auch eine Kantenverrundung eingebracht werden, was zusammenfassend als Einführschräge bezeichnet wird. Dies verhindert Beschädigungen an den Dichtelementen des Liners (also z.B. den genannten Vorsprüngen) und sorgt für eine bessere Montierbarkeit.

Verfahrensseitig kann zu diesem Zweck bei entsprechender Weiterbildung noch vorgesehen sein, dass in Schritt iii) die Innenkomponente mittels einer geeigneten Vorrichtung, insbesondere einen Dorn, in ihrem Außendurchmesser reduziert wird, indem der Vorsprung radial nach innen verlagert wird, und dass im Anschluss an Schritt iii) die Vorrichtung entfernt wird, wodurch die Innenkomponente mit ihrem Vorsprung in den Freiraum eingreift.

Allgemein ermöglicht die vorliegende Erfindung das Fügen von Innenliner (d.h. der Innenkomponente), Balg und Endstück (Anschlussteil) auf möglichst kurzem Bauraum, wobei die besondere Dichtheit der Verbindung hervorzuheben ist.

Erfindungsgemäß ist die Verbindung zwischen Metallschlauch und flexiblem Innenliner mit vielfältigen Werkstoffen, z.B. aus Kunststoff, speziell FKM oder PTFE, aber auch mit anderen Werkstoffen realisierbar.

Insgesamt erreicht die vorliegende Erfindung, speziell im Rahmen ihrer einschlägigen Weiterbildungen, eine besonders gute Dichtheit der Verbindung in den Zwischenraum zwischen Liner (Innenkomponente) und Balg. Damit einher geht die Sicherheit gegen einen Auszug bei axialem Zug durch hohe Kräfte oder durch Kriechen.

Abweichend von der bisherigen Beschreibung kann alternativ oder zusätzlich zu einer radial innenliegenden Innenkomponente auch eine radial außenliegende Außenkomponente eingesetzt werden, die den Balg und zumindest teilweise auch das Gegenstück an seiner Außenseite umfänglich umgibt. Dazu muss dann der Freiraum entsprechend ausgebildet sein und insbesondere (auch) nach außen öffnen. Die Außenkomponente weist dann entsprechend einen radialen Vorsprung nach innen auf, mit dem sie in den Freiraum eingreift.

Ansonsten kann die Außenkomponente vorzugsweise der Innenkomponente entsprechen, insbesondere was die Materialauswahl anbelangt.

Dadurch lässt sich eine Verbesserung des Ausknickverhaltens des Balgs (als Hauptfunktion) erreichen. Außerdem ergibt sich eine sog. "fail safe Lösung" bei Leckage des Balgs. Ein weiterer Vorteil besteht in der Ermöglichung eines sauberkeitsgerechten Designs bei zusätzlicher Verwendung kontaminierter Zwischenschichten, wie z.B. eines zusätzlichen Geflechtmantels.

Möglich ist in diesem Zusammenhang auch die Abfolge (radial von innen nach außen) Balg-Liner-Geflecht, wobei der Liner außerhalb des Balgs angebracht werden kann und als Reduzierung des Reibwertes oder zur Reduzierung von Abrieb am Balg dient.

Alle vorstehend beschriebenen Schweißverbindungen können alternativ jeweils auch als Klebeverbindungen ausgeführt sein.

Weitere Eigenschaften und Vorteile der Erfindung ergeben sich aus der nachfolgenden Beschreibung von Ausführungsbeispielen anhand der Zeichnung. Gleiche Bezugszeichen bezeichnen dabei gleiche oder zumindest gleichwirkende Elemente.
Figur 1 zeigt eine erste Ausgestaltung des flexiblen Leitungselements gemäß der Erfindung;
Figur 2 zeigt ein Detail X aus der Figur 1;
Figur 3 zeigt eine zweite Ausgestaltung des flexiblen Leitungselements gemäß der Erfindung;
Figur 4 zeigt ein Detail X aus der Figur 3.
Figur 5 zeigt eine dritte Ausgestaltung des flexiblen Leitungselements gemäß der Erfindung;
Figur 6 zeigt ein Detail X aus der Figur 5;
Figur 7 zeigt ein entsprechendes Detail bei einer weiteren Ausführungsform des flexiblen Leitungselements gemäß der Erfindung;
Figur 8 zeigt ein entsprechendes Detail bei noch einer weiteren Ausführungsform des flexiblen Leitungselements gemäß der Erfindung;
Figur 9 zeigt ein entsprechendes Detail bei wieder einer weiteren Ausführungsform des flexiblen Leitungselements gemäß der Erfindung; und
Figur 10 zeigt ein entsprechendes Detail bei einer anderen Ausführungsform des flexiblen Leitungselements gemäß der Erfindung.

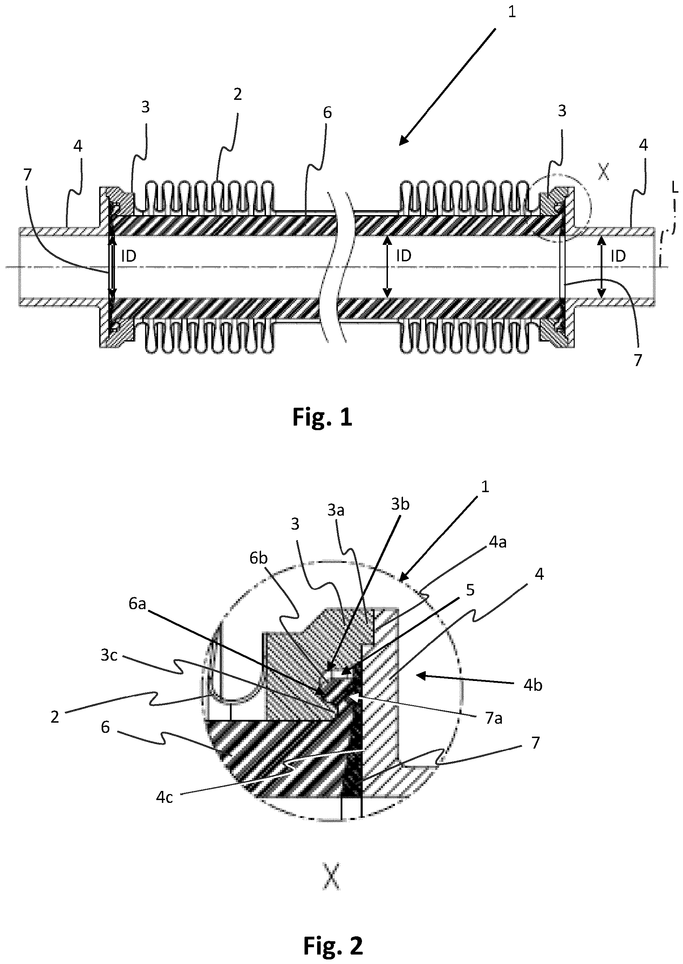

In der Figur 1 bezeichnet Bezugszeichen 1 ein erfindungsgemäßes flexibles Leitungselement. Dieses umfasst einen dünnwandigen metallischen Schlauch oder Balg 2, der vorliegend zumindest in Abschnitten entlang einer Längsachse L ringgewellt ausgebildet ist. Es liegt auch im Rahmen der Erfindung, den Schlauch/Balg 2 über seine gesamte Länge gewellt auszubilden. Nachfolgend wird zur Vereinfachung wieder nur der Begriff "Balg" verwendet, wenn Balg oder Schlauch gemeint sind. Der Balg 2 besteht vorzugsweise aus (Edel-) Stahl.

An seinen beiden Enden weist der Balg 2 - spiegelbildlich-identisch - jeweils ein ringförmiges Gegenstück 3 aus Metall auf, vorzugsweise auf (Edel-) Stahl, dessen genaue Ausformung sich am besten in der Figur 2 erkennen lässt. Das Gegenstück 3, aufgrund seiner Funktion auch als "Anschweißteil" bezeichnet, ist auf seiner dem Balg 2 zugewandten Seite stoffschlüssig mit diesem verbunden, bevorzugt verschweißt. Auf seiner dem Balg 2 abgewandten anderen Seite ist das Gegenstück 3 ebenfalls stoffschlüssig mit einem rohrförmigen Anschlussteil 4 aus Metall, vorzugsweise ebenfalls aus (Edel-) Stahl, verbunden. Dazu weist das Gegenstück 3 stirnseitig einen umlaufenden (Zentrier-) Vorsprung 3a auf, während das Anschlussteil 4 bei Bezugszeichen 4a eine zu dem Vorsprung 3a komplementäre stirnseitige Ausnehmung besitzt. In dem verbundenen Zustand gemäß Figur 1 und 2 greift der Vorsprung 3a in die Ausnehmung 4a ein und zentriert Gegenstück 3 sowie Anschlussteil 4 bezüglich der Längsachse L. Eine umgekehrte Ausgestaltung ist ebenfalls möglich.

Im Bereich des Zentriervorsprungs 3a und der Ausnehmung 4a können jeweils komplementäre Gewindestrukturen zum Verbinden von Gegenstück 3 und Anschlussteil 4 vorhanden sind, die in den Figuren nicht dargestellt sind.

Die Ausnehmung 4a ist seitlich in einem sich radial erstreckenden, endständig umlaufenden Vorsprung 4b des Anschlussteils 4 bzw. in einer sich ausschließlich radial erstreckenden Stirnseitenfläche 4c des Anschlussteils 4 ausgebildet. Der Begriff "radial" bezieht sich im Rahmen der vorliegenden Beschreibung immer auf eine Richtung senkrecht zu der genannten Längsachse L.

Gegenstück 3 und Anschlussteil 4 berühren sich stirnseitig nicht vollflächig; vielmehr ist axial zwischen der Stirnseitenfläche 4c des Anschlussteils 4 und dem Gegenstück 3 ein Freiraum 5 gebildet, der in Umfangsrichtung durchgängig ausgebildet ist und radial nach innen öffnet. Dagegen ist er radial nach außen durch die miteinander verbundenen Elemente Gegenstück 3 und Anschlussteil 4 begrenzt bzw. abgeschlossen.

In diesen Freiraum 5 greift eine radial innerhalb des Balgs 2 und radial beabstandet zu diesem angeordnete Innenkomponente 6 mit einem endständigen, radialen Vorsprung 6a ein. Die Innenkomponente 6 besteht bevorzugt aus spritzgegossenem Fluorkautschuk (FKM) oder einem anderen gummiartigen, elastischen Werkstoff, der vorzugsweise gegenüber hochreinem entsalztem oder entmineralisiertem Wasser beständig ist, sodass sich das Leitungselement 1 für entsprechende Verwendungen, z.B. in der Halbleiterfertigung, eignet. Die Innenkomponente 6 bzw. der Vorsprung 6a ist zwischen Gegenstück 3 und Anschlussteil 4 eingeklemmt (verpresst) und dadurch gehalten.

Um die Auszugsfestigung zu erhöhen und insbesondere dafür zu sorgen, dass kein Medium aus dem Inneren des Leitungselements 1 in den Bereich zwischen Balg 2 und Innenkomponente 6 gelangen kann, weist das Gegenstück 3 in dem Bereich des Freiraums 5 eine radial wirksame Hinterschneidung 3b auf, die radial nach innen durch einen Steg 3c begrenzt ist. Vorliegend wird dies auch so zum Ausdruck gebracht, dass der Freiraum 5 eine entsprechende Hinterschneidung aufweist, was als gleichbedeutend zu verstehen ist. Der genannte Steg 3c besitzt eine abgerundete Außenkontur, während die Hinterschneidung 3b eine abgerundete Innenkontur besitzt. Der Vorsprung 6a der Innenkomponente 6 weist eine axiale Auswölbung 6b auf, die eine zu der Innenkontur der Hinterschneidung 3b zumindest teilweise komplementäre Formgebung im Bereich ihrer Außenkontur besitzt - teilweise komplementär deshalb, weil die Auswölbung 6b die Hinterschneidung 3b nicht vollständig ausfüllt, wie man insbesondere der Figur 2 entnimmt. Dadurch wird erreicht, dass es beim Verpressen nicht zu einer Blockade durch überschüssiges, inkompressibles Material (der Innenkomponente 6) in dem Freiraum 5 kommt, was die Qualität der erreichbaren Verbindung beeinträchtigen oder den Innendurchmesser vermindern könnte, was möglicherweise eine Funktionseinschränkung bedingt.

Anders ausgedrückt: das Materialvolumen des Vorsprungs 6a ist kleiner als das Volumen des Freiraums 5.

Die Innenkomponente 6 ist ansonsten, d.h. abgesehen von dem Vorsprung 6a vorzugsweise glattzylindrisch und mit kreisförmigem Querschnitt ausgebildet. Für die Innenkomponente 6 gibt es weitere mögliche Ausformungen, die bei einer Ausgestaltung als Spritzgussteil einfach realisierbar sind. Die Innenkomponente 6 erstreckt sich in axialer Richtung von dem linksseitigen Anschlussteil 4 bis zu dem Anschlussteil 4 auf der anderen (rechten) Seite der Anordnung. Ein lichter Innendurchmesser ID der Innenkomponente 6 entspricht dem lichten Innendurchmesser ID der Anschlussteile 4, so dass das Leitungselement 1 insgesamt einen konstanten Innendurchmesser ID besitzt.

Das Anschlussteil 4 erstreckt sich entsprechend radial über das Gegenstück hinaus nach innen und schließt dort auf einem Niveau mit der Innenkomponente 6 ab. Umgekehrt ist also die Innenkomponente 6 auch teilweise radial innerhalb des Gegenstücks 3 angeordnet bzw. erstreckt sich durch dieses hindurch.

Wie man insbesondere der Figur 2 entnehmen kann, ist auf beiden Seiten zwischen derjeweiligen Stirnseitenfläche 4c des Anschlussteils 4 und der Innenkomponente 6 ein Ringteil 7 eingesetzt, dessen lichter Innendurchmesser ID den bereits erwähnten Innendurchmessern ID von Gegenstück 3 und Anschlussteil 4 entspricht. Das Ringteil 7 weist einen sich in radialer Richtung verjüngenden Querschnitt auf, so dass sich zumindest in dem axialen Bereich zwischen Gegenstück 3 und Anschlussteil 4 eine in dem gezeigten Schnitt erkennbare keilförmige Ausgestaltung des Ringteils 7 ergibt. Weiterhin liegt das Ringteil 7 seitlich vollflächig an der Stirnseitenfläche 4c des betreffenden Anschlussteils 4 an.

In demjenigen Bereich, in dem das Ringteil 7 axial mit dem Gegenstück 3 überlappt, d.h. im Bereich des Stegs 3c und der Hinterschneidung 3b weist das Ringteil 7 einen grundsätzlich konstanten Querschnitt (eine konstante Dicke) sowie eine axiale Auswölbung 7a auf, speziell eine Auswölbung 7a mit abgerundeter Außenkontur, die sich radial auf Höhe der Hinterschneidung 3b befindet und dieser zugewandt ist. Die Außenkontur ist nicht auf runde Formen beschränkt; sie kann auch spitz, z.B. im Schnitt dreieckig, ausgebildet sein.

Durch die besondere Geometrie des Halterings (Ringteil 7) wird das Ende des Liners, d.h. der Vorsprung 6a der Innenkomponente 6 gegen das Gegenstück 3 gedrückt, was die Auszugsfestigkeit erhöht. Zusätzlich sichert der "Bauch des P", also die in die Hinterschneidung 3b eingreifende Auswölbung 6b gegen (weiteres) Ausziehen bei Zugbelastung in axialer Richtung. Der Vorsprung 6a mit der Auswölbung 6b ist insgesamt etwa P-förmig ausgebildet.

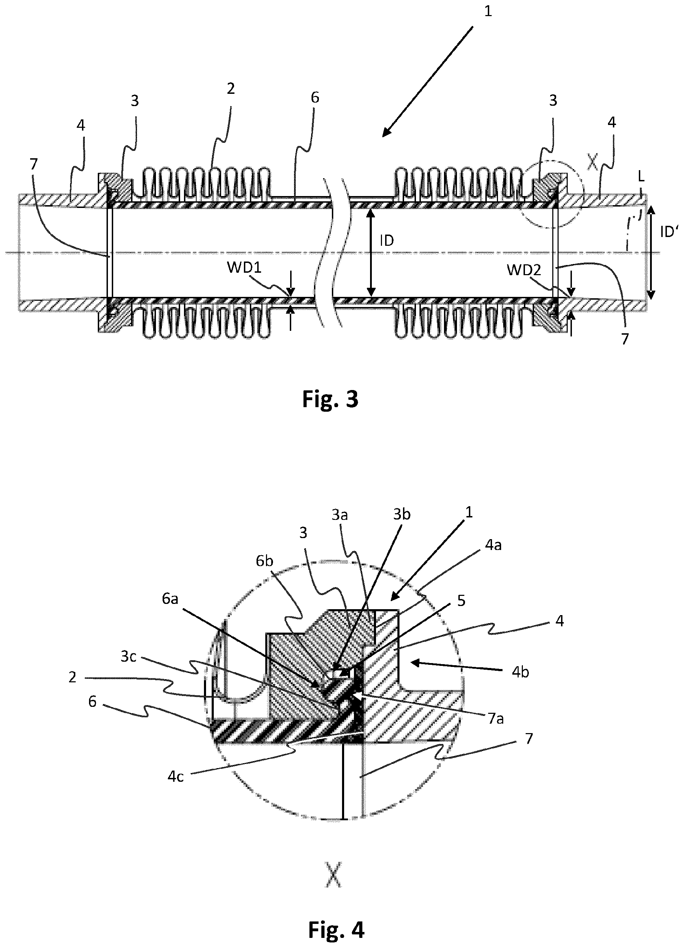

Die zweite Ausgestaltung des flexiblen Leitungselements 1 gemäß den Figuren 3 und 4 entspricht mit Ausnahme einer (deutlich geringeren) Wanddicke WD1 der Innenkomponente 6 im Wesentlichen vollständig den Figuren 1 und 2, so dass darauf hier grundsätzlich nicht weiter einzugehen ist.

Ein anderer Unterschied besteht in der Wanddicke WD2 des Anschlussteils 4 im Bereich seines axialen, freien Endes: wie man insbesondere der Figur 4 entnimmt, ist die Wanddicke WD2 zunächst relativ stark und nimmt dann in axialer Richtung leicht ab, vgl. Figur 3, wodurch sich auch der lichte Innendurchmesser nach Art einer Einführschräge bis auf einen maximalen Innendurchmesser ID' erweitert. In der Ausgestaltung gemäß den Figuren 1 und 2 ist das Anschlussteil 4 in dem genannten Abschnitt dagegen deutlich dünnwandiger ausgeführt; zudem ändert sich der lichte Innendurchmesser ID, wie bereits erwähnt wurde, nicht.

Die zweite Ausgestaltung des flexiblen Leitungselements 1 gemäß den Figuren 3 und 4 ist nicht auf die beschriebene Ausführungsform mit Einführschräge beschränkt, die auch entfallen kann. Des Weiteren kann eine solche Schräge auch bei der Ausgestaltung gemäß den Figuren 1 und 2 vorgesehen sein. Die leichte Schräge dient in der gezeigten Ausführungsform (auch) dazu, den Innendurchmesser ID der Innenkomponente 6 an die Abmessungen des zylindrischen Rohrendes (Anschlussteil 4) zum Anschluss weiterer, kundenseitig vorgegebener Leitungselemente (nicht gezeigt) anzugleichen. Es wurde eine möglichst geringe (Form-) Schräge gewählt, um Druckverluste und FIV gering zu halten.

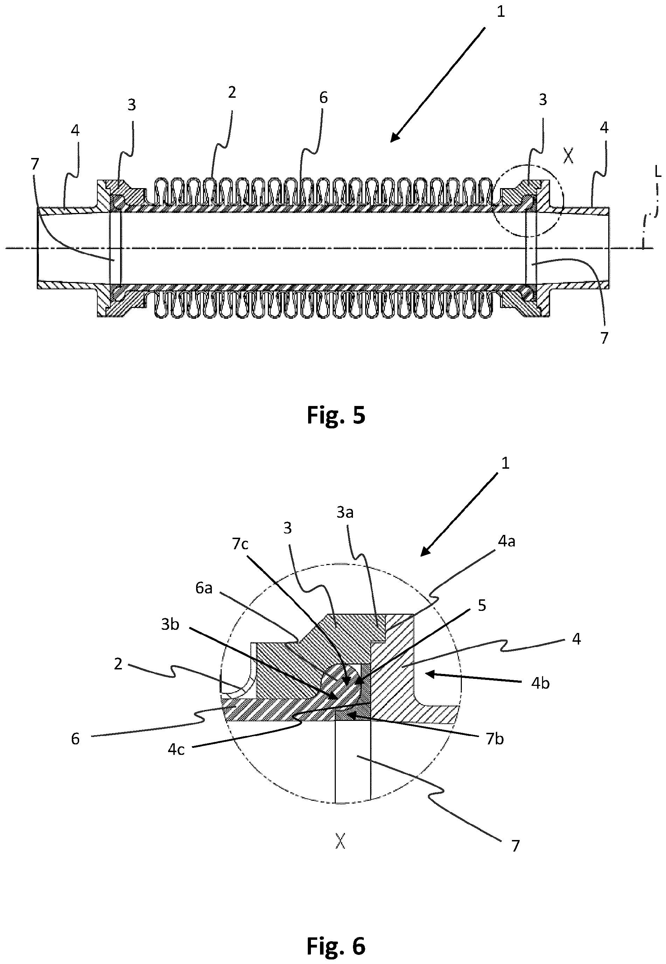

Bei der dritten Ausgestaltung des flexiblen Leitungselements 1 gemäß den Figuren 5 und 6 ist die (Einführ-) Schräge gerade umgekehrt ausgebildet, worauf hier nicht weiter einzugehen ist. Auch die flexiblen Leitungselemente 1 gemäß den Figuren 1 bis 4 können entsprechend ausgebildet sein. Die Innenkomponente 6 gemäß den Figuren 5 und6 entspricht mit Ausnahme der Vorsprünge 6a, auf die weiter unten noch näher eingegangen wird, der Ausgestaltung in Figur 3 und 4.

Figur 6 zeigt detailliert die gemäß Figur 5 und 6 abweichende Ausgestaltung des flexiblen Leitungselements 1 im Bereich insbesondere des Freiraums 5, der Vorsprünge 6a und des Ringteils 7. Letzteres weist bei Bezugszeichen 7b einen axialen Vorsprung auf, der eine radial wirksame Hinterschneidung 7c (entsprechend der Hinterschneidung 3b gemäß den Figuren 2 und 4) in dem Bereich des Freiraums 5 ausbildet und insoweit dem Steg 3c (vgl. Figuren 2 und 4) funktional im Wesentlichen entspricht. Vorliegend wird dies wiederum auch so zum Ausdruck gebracht, dass der Freiraum 5 eine entsprechende Hinterschneidung aufweist, was als gleichbedeutend zu verstehen ist.

Der axiale Vorsprung 7b des Ringteils 7 geht abgerundet bzw. konkav in das restliche Ringteil 7 über, wie man der Figur 6 besonders gut entnimmt. Das Gegenstück 3 weist an seiner den Freiraum 5 begrenzenden Innenseite eine entsprechende, konkav-abgerundete Ausgestaltung auf, so dass der zwischen Gegenstück 3 und Anschlussteil 4 bzw. Ringteil 7 gebildete Freiraum 5 insgesamt im Schnitt etwa kreisförmig ausgebildet ist. Entsprechend ist die Innenkomponente 6 im Bereich ihrer Vorsprünge 6a im Querschnitt im Wesentlichen konvexkreisförmig ausgebildet. Die gezeigte Ausgestaltung des flexiblen Leitungselements 1 wird demzufolge auch als "O-Variante" bezeichnet, weil die Vorsprünge 6a nach Art von O-Ringe gestaltet sind.

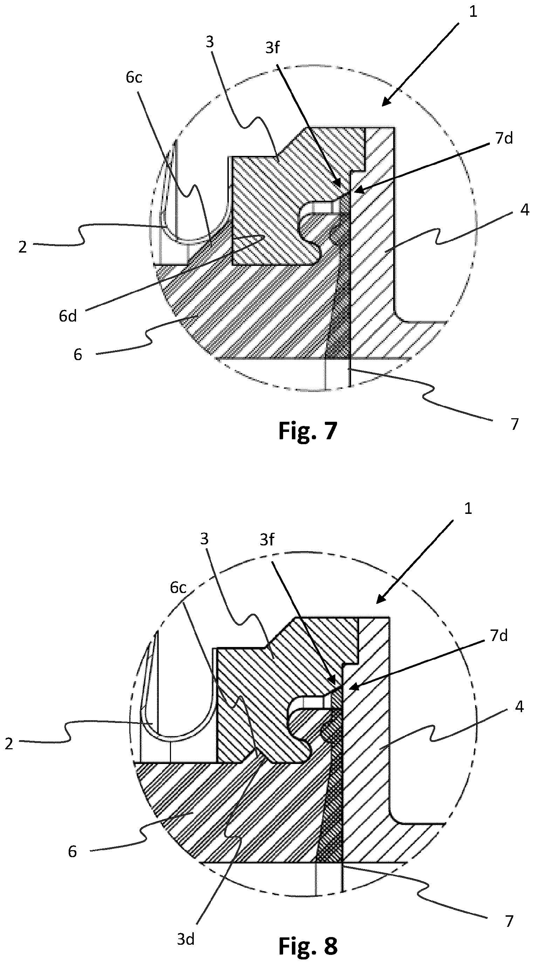

In den Figuren 7 bis 10 sind Detailansichten weiterer Ausgestaltungen des flexiblen Leitungselements 1 in jeweils einem Endbereich dargestellt; das andere Ende kann jeweils gleichartig ausgebildet sein. Es sein nachfolgend nur auf die jeweiligen Besonderheiten genauer eingegangen, sofern sie von den bereits erläuterten Ausgestaltungen abweichen.

Gemäß der Figur 7 weist die Innenkomponente 6 einen weiteren radial außenliegenden umlaufenden Vorsprung 6c auf, der auf einer von dem Anschlussteil 4 abgewandten Seite an dem Gegenstück 3 anliegt. Der weitere Vorsprung 6c ist im Querschnitt dreieckförmig oder sägezahnförmig ausgebildet. Die am den Gegenstück 3 anliegende Seitenfläche 6d erstreckt sich in rein radialer Richtung. Alternativ kann man formulieren, dass die Innenkomponente 6 eine radial außenliegende Nut aufweist (nicht bezeichnet), in die das Gegenstück 3 formschlüssig mit einer entsprechenden Rippe (ebenfalls nicht bezeichnet) eingreift.

Gemäß der Figur 8 besitzt die Innenkomponente 6 ebenfalls einen weiteren radial außenliegenden umlaufenden Vorsprung 6c, der ebenfalls im Querschnitt dreieckförmig ausgebildet ist und der in eine an einer Innenseite des Gegenstücks 3 angeordnete Nut 3d eingreift, die im Querschnitt ebenfalls (komplementär) dreieckförmig ausgebildet ist.

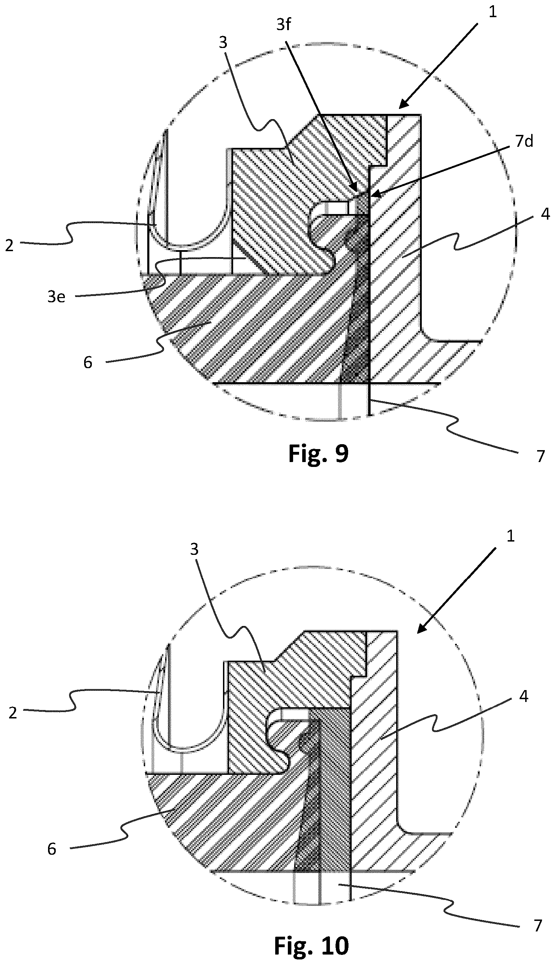

Gemäß der Figur 9 hat das Gegenstück 3 auf seiner dem Anschlussteil 4 abgewandten Seite innenseitig eine umfänglich umlaufende Einführschräge 3e, um die Innenkomponente 6 beim Fügen nicht zu beschädigen.

In allen Figuren 7 bis 9 weist das Ringteil 7 umfänglich umlaufend eine dem Gegenstück 3 zugewandte, radial außen angeordnete Einführfase 7d auf. Das Gegenstück 3 besitzt eine komplementäre, mit der Einführfase 7d zusammenwirkende, umfänglich umlaufende Einführabschrägung 3f.

Gemäß Figur 10 kann das Ringteil 7 die Innenkomponente 6 im Bereich des Vorsprungs 6a axial übergreifen.

Auch eine beliebige Kombination speziell der in den Figuren 7 bis 10 gezeigten Merkmale ist möglich, sofern technisch machbar und sinnvoll.

Zur Herstellung des flexiblen Leitungselements 1 gemäß den Figuren 1 bis 10 werden zunächst Balg 2 und die Gegenstücke 3 verbunden, insbesondere miteinander verschweißt. Dann wird die Innenkomponente 6 eingesetzt (unter geeigneter Verformung, um den Außendurchmesser gezielt zu reduzieren), wobei insbesondere die Vorsprünge 6a mit den Hinterschneidungen 3b in Eingriff gebracht werden. Die Ringteile 7 werden anschließend zusammen mit den Anschlussteilen 4 angebracht und gegen die Gegenstücke 3 bzw. mit der Innenkomponente 6 und den Vorsprüngen 6a axial verpresst. Zum Schluss werden Gegenstücke 3 und Anschlussteile 4 paarweise dauerhaft verbunden, insbesondere aneinander angeschweißt. Die Ringteile 7 können schon beim bzw. vor dem Fügen an den zugehörigen Anschlussteilen 4 fixiert werden, um die Handhabung zu erleichtern, sofern keine einteilige Ausgestaltung vorliegt,.

## Patentansprüche

1. Flexibles Leitungselement (1), aufweisend:
einen metallischen Wellschlauch-Abschnitt oder Balg (2);
an wenigstens einem Ende des Wellschlauch-Abschnitts oder Balgs (2) ein rohrförmiges Anschlussteil (4), das über ein ringförmiges Gegenstück (3) mit dem Wellschlauch-Abschnitt oder Balg (2) verbunden ist, wobei das Gegenstück (3) auf einer Seite mit dem Wellschlauch-Abschnitt oder Balg (2) und auf der anderen Seite mit dem Anschlussteil (4) stoffschlüssig verbunden ist;
eine in dem Wellschlauch-Abschnitt oder Balg (2) und in dem Gegenstück (3) aufgenommene, schlauchförmige Innenkomponente (6) aus einem Kunststoff, insbesondere einem Elastomer-Werkstoff, vorzugsweise aus Fluorkautschuk, und/oder eine den Wellschlauch-Abschnitt oder Balg (2) und das Gegenstück (3) umgebende, schlauchförmige Außenkomponente aus einem Kunststoff, insbesondere einem Elastomer-Werkstoff, vorzugsweise aus Fluorkautschuk;
**dadurch gekennzeichnet, dass**
axial zwischen dem Anschlussteil (4) und dem Gegenstück (3) ein durchgängig umlaufender Freiraum (5) gebildet ist; und
die Innenkomponente (6) und/oder die Außenkomponente in einem Bereich des genannten Endes einen umlaufenden Vorsprung (6a) aufweist, der sich bezüglich einer Längsachse (L) des Leitungselements (1) bei der Innenkomponente (6) radial nach au-ßen und bei der Außenkomponente radial nach innen erstreckt, und mit dem die Innenkomponente (6) und/oder die Außenkomponente in den Freiraum (5) eingreift.

2. Flexibles Leitungselement (1) nach Anspruch 1, **dadurch gekennzeichnet, dass** der Freiraum (5) eine in der radialen Richtung wirksame Hinterschneidung (3b, 7c) aufweist.

3. Flexibles Leitungselement (1) nach Anspruch 2, **dadurch gekennzeichnet, dass** die Innenkomponente (6) an dem Vorsprung (6a) eine Auswölbung (6b) in axialer Richtung aufweist, die mit der Hinterschneidung (3b) in Eingriff steht.

4. Flexibles Leitungselement (1) nach Anspruch 2 oder 3, **dadurch gekennzeichnet, dass** die Hinterschneidung (3b) in dem Gegenstück (3) ausgebildet ist.

5. Flexibles Leitungselement (1) nach einem der Ansprüche 2 bis 4, **dadurch gekennzeichnet, dass** die Hinterschneidung (3b, 7c) eine abgerundete Innenkontur aufweist.

6. Flexibles Leitungselement (1) nach einem der Ansprüche 2 bis 5, **dadurch gekennzeichnet, dass** die Auswölbung (6b) eine zu der Hinterschneidung (3b) komplementäre Außenkontur aufweist.

7. Flexibles Leitungselement (1) nach einem der Ansprüche 2 bis 6, **dadurch gekennzeichnet, dass** ein die Hinterschneidung (3b) in radialer Richtung nach innen begrenzender Steg (3c) eine abgerundete Außenkontur aufweist.

8. Flexibles Leitungselement (1) nach einem der Ansprüche 1 bis 7, **dadurch gekennzeichnet, dass** der Vorsprung (6a) den Freiraum (5) und insbesondere die Hinterschneidung (3b) gemäß Anspruch 2 nur zu einem Bruchteil ausfüllt.

9. Flexibles Leitungselement (1) nach einem der Ansprüche 1 bis 8, **dadurch gekennzeichnet, dass** die Innenkomponente (6) in einem lichten Abstand in radialer Richtung zu dem Wellschlauch-Abschnitt oder Balg (2) angeordnet ist.

10. Flexibles Leitungselement (1) nach einem der Ansprüche 1 bis 9, **dadurch gekennzeichnet, dass** ein lichter Innendurchmesser (ID) der Innenkomponente (6) gleich einem minimalen lichten Innendurchmesser (ID) des Anschlussteils (4) ist, der vorzugsweise zu dessen freien Ende hin erweitert ist.

11. Flexibles Leitungselement (1) nach einem der Ansprüche 1 bis 10, **dadurch gekennzeichnet, dass** die Innenkomponente (6) eine radial außenliegende Nut aufweist, in die das Gegenstück (3) eingreift.

12. Flexibles Leitungselement (1) nach einem der Ansprüche 1 bis 11, **dadurch gekennzeichnet, dass** die Innenkomponente (6) einen weiteren radial außenliegenden umlaufenden Vorsprung (6c) aufweist, der auf einer von dem Anschlussteil (4) abgewandten Seite an dem Gegenstück (3) anliegt oder der in eine an einer Innenseite des Gegenstücks (3) angeordnete Nut (3d) eingreift, wobei insbesondere der weitere Vorsprung (6c) und die Nut (3d) im Querschnitt dreieckförmig oder halbrund ausgebildet sind.

13. Flexibles Leitungselement (1) nach einem der Ansprüche 1 bis 12, **dadurch gekennzeichnet, dass** das Gegenstück (3) endständig einen axialen Zentriervorsprung (3a) und das Anschlussteil (4) an seiner dem Gegenstück (3) zugewandten Seite eine komplementäre Ausnehmung (4a) aufweist, wobei das Gegenstück (3) mit dem Zentriervorsprung (3a) in die Ausnehmung (4a) eingreift, oder umgekehrt.

14. Flexibles Leitungselement (1) nach Anspruch 13, **dadurch gekennzeichnet, dass** im Bereich des Zentriervorsprungs (3a) und der Ausnehmung (4a) jeweils komplementäre Gewindestrukturen vorhanden sind.

15. Flexibles Leitungselement (1) nach einem der Ansprüche 1 bis 14, **dadurch gekennzeichnet, dass** das Anschlussteil (4) an einer dem Freiraum (5) zugewandten Stirnseitenfläche (4c) eben ausgebildet ist, wobei vorzugsweise die Stirnseitenfläche (4c) sich ausschließlich in radialer Richtung erstreckt.

16. Flexibles Leitungselement (1) nach einem der Ansprüche 1 bis 13, **dadurch gekennzeichnet, dass** zwischen einer endständigen Stirnseite der Innenkomponente (6) und dem Anschlussteil (4), insbesondere an dessen Stirnseitenfläche (4c) gemäß Anspruch 15, ein durchgängig umlaufendes Ringteil (7) angeordnet ist.

17. Flexibles Leitungselement (1) nach Anspruch 16, **dadurch gekennzeichnet, dass** das Ringteil (7)
a) sich radial bis in einen Bereich des Freiraums (5) und bevorzugt bis gegen das Gegenstück (3) erstreckt; und/oder
b) radial auf Höhe der Hinterschneidung (3b) eine axiale Auswölbung (7a) aufweist, insbesondere eine Auswölbung (7a) mit abgerundeter Außenkontur; und/oder
c) einen sich in radialer Richtung verjüngenden Querschnitt aufweist, insbesondere in einem radial innerliegenden Teilabschnitt des Ringteils (7); und/oder
d) einen lichtem Innendurchmesser (ID) aufweist, der dem lichten Innendurchmesser (ID) der Innenkomponente (6) und dem minimalen lichten Innendurchmesser (ID) des Anschlussteils (4) gemäß Anspruch 10 entspricht; und/oder
e) einen axialen Vorsprung aufweist, der die in der radialen Richtung wirksame Hinterschneidung (7c) gemäß Anspruch 2 ausbildet.

18. Flexibles Leitungselement (1) nach Anspruch 16 oder 17, **dadurch gekennzeichnet, dass** das Ringteil (7) umfänglich umlaufend eine dem Gegenstück (3) zugewandte Einführfase (7d) und das Gegenstück (3) eine komplementäre, mit der Einführfase (7d) zusammenwirkende, umfänglich umlaufende Einführabschrägung (3f) aufweist.

19. Flexibles Leitungselement (1) nach einem der Ansprüche 1 bis 18, **dadurch gekennzeichnet, dass** das Gegenstück (3) auf seiner dem Anschlussteil (4) abgewandten Seite innenseitig eine Einführschräge (3e) aufweist.

20. Verfahren zur Herstellung eines flexiblen Leitungselements (1), insbesondere des flexiblen Leitungselements (1) gemäß einem der vorherigen Ansprüche, beinhaltend:
i) Bereitstellen eines metallischen Wellschlauch-Abschnitts oder Balgs (2);
ii) an wenigstens einem Ende des Wellschlauch-Abschnitts oder Balgs (2) stoffschlüssiges Anbinden eines ringförmigen Gegenstücks (3);
iii) Einbringen einer schlauchförmigen Innenkomponente (6), insbesondere aus einem Elastomer-Werkstoff, in den Wellschlauch-Abschnitt oder Balg (2) und in das Gegenstück (3), insbesondere bei radialem Zusammendrücken der Innenkomponente (6), die in einem Bereich des genannten Endes einen umlaufenden Vorsprung (6a) aufweist, der sich bezüglich einer Längsachse (L) des Leitungselements (1) radial nach außen erstreckt;
iv) axiales Anfügen eines rohrförmigen Anschlussteils (4) an das Gegenstück (3) unter Bildung eines durchgängig umlaufenden Freiraums (5) axial zwischen Anschlussteil (4) und Gegenstück (3), so dass die Innenkomponente (6) mit ihrem Vorsprung (6a) in den Freiraum (5) eingreift;
v) dauerhaftes, bevorzugt stoffschlüssiges Verbinden von Anschlussteil (4) und Gegenstück (5) unter Einklemmung der Innenkomponente (6) zwischen Anschlussteil (4) und Gegenstück (3) in einem Bereich des Freiraums (5).

21. Verfahren nach Anspruch 20, **dadurch gekennzeichnet, dass** zusammen mit dem Anschlussteil (4) ein durchgängig umlaufendes Ringteil (7) zwischen einer endständigen Stirnseite der Innenkomponente (6) und dem Anschlussteil (4) eingefügt wird, welches Ringteil (7) vorzugsweise weiterhin gemäß den betreffenden Merkmalen aus Anspruch 17 ausgebildet ist.

22. Verfahren nach Anspruch 20 oder 21, **dadurch gekennzeichnet, dass** in Schritt iii) die Innenkomponente (6) mittels einer geeigneten Vorrichtung, insbesondere einen Dorn, in ihrem Außendurchmesser reduziert wird, indem der Vorsprung (6a) radial nach innen verlagert wird, und dass im Anschluss an Schritt iii) die Vorrichtung entfernt wird, wodurch die Innenkomponente (6) mit ihrem Vorsprung (6a) in den Freiraum (5) eingreift.
